# EUROPEAN PATENT APPLICATION

(11) **EP 4 180 548 A1**
(43) Date of publication of application: **17.05.2023**
(21) Application number: 21850736.6
(22) Date of filing: 30.07.2021
(51) Int. Cl.: C22C 38/02, C22C 38/04, C22C 38/06, C22C 38/22, C22C 38/24, C22C 38/26, C22C 38/28, C22C 38/38, C21D 1/30, C21D 7/06, C21D 8/02, B23P 15/00, B60G 21/05

(54) **STEEL PLATE FOR TORSION BEAM AND MANUFACTURING METHOD THEREFOR, AND TORSION BEAM AND MANUFACTURING METHOD THEREFOR**

(30) Priority: 31.07.2020 CN 202010765528
(71) Applicant: BAOSHAN IRON & STEEL CO., LTD., Shanghai 201900 (CN)
(72) Inventor: LIU, Chunsu, Shanghai 201900 (CN); ZHANG, Yulong, Shanghai 201900 (CN); YANG, Feng, Shanghai 201900 (CN); NI, Yaping, Shanghai 201900 (CN); LU, Ruodong, Shanghai 201900 (CN); WANG, Jintao, Shanghai 201900 (CN); HAN, Jun, Shanghai 201900 (CN); YU, Tongwen, Shanghai 201900 (CN)
(74) Representative: FARAGO Patentanwälte GmbH
(86) International application number: PCT/CN2021/109665
(87) International publication number: WO 2022/022692

(57) **Abstract**

Disclosed are a steel plate for a torsion beam and a manufacturing method therefor, and a torsion beam and a manufacturing method therefor. The steel plate for the torsion beam has the following chemical components in percentages by mass: 0.04-0.085% of C, 0.02-0.5% of Si, 1.3-1.8% of Mn, 0.15-0.5% of Cr, 0.12-0.30% of Mo, 0.058% or less of Nb, 0.15% or less of V, 0.02% or less of Ti, 0.02-0.1% of Al, 0.02% or less of P, 0.005% or less of S, 0.005% or less of N, and the balance being Fe and inevitable impurities. The steel plate has one or two of Nb and V, and the amount of Nb and V satisfies 0.096%≤2Nb+V≤0.17%. The steel plate for the torsion beam of the present invention has an excellent elongation and excellent cold bending properties while ensuring high strength, and meets the requirement for producing lightweight torsion beams.

## Description

### TECHNICAL FIELD

The present invention relates to the field of steel, in particular to a steel plate for a torsion beam, a manufacturing method therefor, and a torsion beam and a manufacturing method therefor.

### BACKGROUND

Torsion beams are widely used in Class A vehicles, multi-purpose vehicles (MPVs), and new energy vehicles due to their simple structure, small space occupying, low cost, and the like. Conventional torsion beams are open-type torsion beams that typically have a plate thickness of 6 mm or more and a single piece weight of 15 kg or more. To increase the vehicle stiffness, a stabilizer bar is typically added to the inside of the torsion beam, which results in a torsion beam assembly weighing up to 20 kg. However, a closed torsion beam generally weighs no more than 10 kg in a single piece and does not necessarily need a stabilizer bar, which conforms to the concept of automobile lightweight. The domestic automobile rear axle has gradually transitioned to the closed torsion beam under the trend of environmental protection and strengthening.

Currently there are two main paths of hot stamping and cold forming for producing the closed torsion beam:
the hot stamping has the characteristic that a steel pipe is press-formed to have a special-shaped section, heated to a high temperature of 920-940°C and kept warm, and then quenched. In this process, the heating temperature needs to reach above the phase transition point, and an atmosphere for preventing scales needs to be used, so that the process cost is high. At the same time, high-temperature heat treatment easily deforms pipe fittings, resulting in dimensional deviations and thus problems in the subsequent assembly process. In addition, a comparative study of the cross beam properties of tubular torsion beams has shown that compared with cold stamped materials, the welding heat affected zone of the hot stamped materials after welding is severely softened, which tends to cause cracking.

In the cold forming process, the cross beam of the closed torsion beam has a transition region for stretching and bending, referred to as a fillet region, where the stress is concentrated. If the steel having relatively low strength is chosen to reduce the stress in the fillet region, the strength and stiffness of the product are not guaranteed. One approach is to increase strength and stiffness by increasing the thickness, but which does not meet the requirement for lightweight vehicles.

### SUMMARY

The present invention provides a steel plate for a torsion beam and a manufacturing method therefor to solve the above-mentioned technical problems.

The present invention provides a steel plate for a torsion beam, having the following chemical components in percentages by mass: 0.04-0.085% of C, 0.02-0.5% of Si, 1.3-1.8% of Mn, 0.15-0.5% of Cr, 0.12-0.30% of Mo, 0.058% or less of Nb, 0.15% or less of V, 0.02% or less of Ti, 0.02-0.1% of Al, 0.02% or less of P, 0.005% or less of S, 0.005% or less of N, and the balance being Fe and inevitable impurities, wherein the steel plate has one or two of Nb and V, and the amount of Nb and V satisfies the following formula 0.096%≤2Nb+V≤0.17%. Each numerical range includes endpoints unless specifically stated.

In the chemical composition design of the present invention:
carbon (C): the carbon content largely determines the tensile strength level of the steel plate. Carbon is used for solid solution strengthening and forming enough microalloying precipitates to ensure the strength of the steel. If the carbon content is too low, the strength of the steel plate is reduced; if the carbon content is too high, the bending properties and elongation are not good, which affects the subsequent design for a fillet of a torsion beam. The content of C in the steel plate of the present invention is relatively low, which is conducive to improving the bending performance of the steel plate and improving the weld fatigue performance. In the case of the steel plate composition defined in the present invention, the carbon content of the present invention is controlled to be 0.04-0.085% to ensure that the steel can not only achieve a relatively high longitudinal tensile strength, but also obtain the desired bending performance, forming and welding performance.

Silicon (Si): silicon in steel plays a role of solid solution strengthening, increasing the strength of the steel plate. The addition of silicon can also increase the work hardening rate and the uniform elongation and total elongation under given strength, which is helpful to improve the elongation of the steel plate. In addition, silicon can also prevent the precipitation of carbides and reduce the appearance of a pearlite phase. However, silicon in the steel tends to cause surface defects such as fayalite (2FeO-SiO₂) oxide scales to form on the surface of the steel plate, thereby affecting the fatigue performance. The silicon content of the present invention is controlled to be less than or equal to 0.5%, preferably 0.02-0.5%.

Manganese (Mn): manganese is a solid solution strengthening element in the present invention, and a low content of manganese causes insufficient strength, but a high content of manganese causes a decrease in the plasticity of the steel plate, and at the same time, segregation and MnS inclusions are easily generated, which is detrimental to the fatigue properties. To have good formability and uniform structure on the premise of ensuring the tensile strength of the product, the manganese content of the present invention is controlled to be 1.3-1.8%.

Aluminum (Al): aluminum is a deoxidizing element of steel, which reduces oxide inclusions in the steel and purifies the steel, contributing to increase the elongation and bending properties of the steel plate. However, a high aluminum content causes Al₂O₃ inclusions, which affect the continuous casting production and the fatigue properties of the steel plate, so the aluminum content of the present invention is controlled to be 0.02-0.1%.

Chromium (Cr): chromium inhibits the formation of pearlite, favors the formation of a bainite structure, and ultimately favors the increase in strength. A chromium content less than 0.15% does not significantly affect a CCT curve (a cold austenite continuous cooling transformation curve), and a high Cr content leads to high cost, so the chromium content is controlled to be 0.15-0.5% in the present invention. Preferably, the chromium content is 0.15-0.43%.

Molybdenum (Mo): molybdenum inhibits the formation of pearlite and favors the formation of the bainite structure. When microalloying elements are also added, it is favored to the precipitation of microalloy and finally favored to the increase of the strength of the steel plate. To ensure that the strength of the torsion beam is not reduced during the subsequent stress relief annealing of the torsion beam, the addition of molybdenum is advantageous to increase the tempering resistance of a material to ensure the strength of the annealed torsion beam. However, the cost is high when the Cr content is high, so the molybdenum content is controlled to be 0.12-0.3% in the present invention, preferably 0.15-0.3%.

Niobium (Nb): niobium is one of the important elements for precipitation strengthening and grain refinement strengthening, existing in the form of fine precipitates after coiling or in cooling after rolling and utilizing precipitation strengthening to improve the strength. At the same time, the presence of niobium facilitates grain refinement, increasing the strength and toughness. The strengthening effect is close to saturation when the niobium content is higher than 0.058% and the cost is relatively high, so the niobium content of the present invention is 0.058% or less. Preferably, the niobium content is in the range of 0.01-0.058%, and more preferably, the niobium content is in the range of 0.012-0.046%.

Vanadium (V): vanadium is one of the important elements for precipitation strengthening and grain refinement strengthening. When added in conjunction with niobium, V performs a role of refining austenite grains and precipitation strengthening, and exists in the form of fine precipitates after coiling or in cooling after rolling, utilizing precipitation strengthening to improve the strength. To ensure that the strength of the torsion beam does not decrease during the subsequent stress relief annealing of the torsion beam, adding a certain amount of vanadium is conducive to increasing the strength of the material, so the vanadium content is 0.15% or less in the present invention. Preferably, the vanadium content is in the range of 0.01-0.15%, and more preferably, the vanadium content is in the range of 0.025-0.10%.

In addition to the above-mentioned limitations on the ranges of the two elements niobium and vanadium themselves, the two elements need to satisfy 0.096%≤2Nb+V≤0.17%. The addition of the niobium or vanadium element results in nano-precipitates of microalloy (Mo, Nb)C or (Mo, V)C, thereby further increasing the strength of the steel plate and obtaining better elongation and cold bending properties. The steel plate of the present invention may contain Nb or V or both Nb and V, and the amount of Nb and V satisfies 0.096%≤2Nb+V≤0.17%, thereby maintaining or even increasing the strength during stress relief annealing in the subsequent manufacturing of the torsion beam.

Titanium (Ti): titanium is one of the important elements for precipitation strengthening and grain refinement strengthening. For the steel plate of the present invention, on one hand, the addition of a trace titanium can fix free nitrogen, because free nitrogen atoms in the steel are detrimental to the impact toughness, while titanium combines with the impurity element nitrogen in the steel to form TiN; on the other hand, when the titanium element is contained in the steel plate of the present invention, it can refine austenite grains in conjunction with elements such as niobium. In addition, titanium is added to maintain or even increase the strength during the stress relief annealing in the manufacturing of the torsion beam. But the Ti content in the present invention should not be too high, otherwise coarse TiN precipitates are easily formed, which is detrimental to the fatigue properties of the steel. Therefore, the Ti content is controlled to be 0.02% or less in the present invention. Preferably, the titanium content is in the range of 0.005-0.02%.

Phosphorus (P): phosphorus in steel is generally solid solved in ferrite, reducing the toughness of the steel. High phosphorus content is detrimental to weldability. At the same time, phosphorus is segregated at grain boundaries, which is detrimental to the hole expansion properties of strip steel, so that the phosphorus content should be minimized, and the P content in the present invention is less than or equal to 0.02%.

Sulfur (S): the sulfur content and the morphology of sulfide are major factors affecting formability, the large amount and large size of sulfides are detrimental to the pore expansion property, so the sulfur content is controlled to be less than or equal to 0.005% in the present invention.

Nitrogen (N): nitrogen reacts with titanium at high temperature to form TiN precipitates, and coarse TiN particles are detrimental to the fatigue performance. Therefore, the nitrogen content in the steel must be controlled, and the nitrogen content is controlled to be less than or equal to 0.005% in the present invention.

Optionally, in addition to the above-mentioned content limitations for Cr and Mo respectively, the amount of chromium and molybdenum needs to satisfy 0.3%≤0.5Cr+Mo≤0.55% to retard the transformation of pearlite, which is conducive to the formation of a bainite phase during the manufacturing of the steel plate, and is also conducive to improving the bending properties of the steel plate, and thus obtaining better fatigue properties; and another object is to ensure that the material has relatively good tempering resistance, and the basic mechanical properties of the tube is maintained after stress relief annealing.

Optionally, the chemical components of the steel plate satisfy a carbon equivalent CE_{IIw}≤0.50, wherein CE_{IIw}=%C+%Mn/6+%(Cr+Mo+V)/5+%(Ni+Cu)/15. The CE_{IIw}≤0.50 in the present invention ensures good welding performance. The calculation formula for the carbon equivalent is a currently accepted empirical formula, the numerical value substituted in the formula is the percentage content of the corresponding element, and the CE_{IIw} is dimensionless. The steel plate of the present invention does not contain nickel (Ni) or copper (Cu), or only contains a small amount of residual nickel and copper, which is negligible in the calculation of the carbon equivalent, thus Ni+Cu is zero in the formula.

Optionally, a microstructure of the above-mentioned steel plate contains bainite and ferrite, the total amount of bainite and ferrite in the steel plate is greater than or equal to 90%, i.e. the sum of the volume fractions of bainite+ferrite is 90% or more, and the volume fraction of bainite in the steel plate is greater than 50%, in particular for example in the range of 55-85%. Such a microstructure contributes to the strength and bending properties of the steel plate for the torsion beam. Preferably, the sum of the volume fractions of bainite+ferrite is greater than 95% and is expected to be as close to 100% as possible.

Optionally, the microstructure of the steel plate for the torsion beam further contains pearlite and/or martensite, that is, the steel plate for the torsion beam may also contain pearlite, or martensite, or both pearlite and martensite, wherein the volume fraction of the pearlite and martensite in the steel plate is 10% or less, whether one or both of the pearlite and martensite are present. Preferably, the sum of the volume fractions of pearlite and martensite in the steel plate is less than 5% and is expected to be close to 0.

By using the chemical composition of the present invention, the steel plate for the torsion beam obtained can achieve a longitudinal yield strength of 620 MPa or more, a tensile strength of 760 MPa or more, an A50 elongation of 16% or more, and a 180° cold bending property R/T of 1.05 or more. At the same time, the uniform elongation of the steel plate is 7.0 or more. Preferably, the longitudinal yield strength is in the range of 620-720 MPa, the tensile strength is in the range of 760-860 MPa, the A50 elongation is in the range of 16-24%, and the uniform elongation is in the range of 7.0-11.5. It is because the steel plate of the present invention satisfies the above parameters that it provides a basis for the superior performance of the torsion beam.

The present invention provides a manufacturing method of a steel plate for a torsion beam, and the properties of the obtained steel plate are further improved by improving the manufacturing method. Specifically, in the manufacturing method of the present invention, the steel plate has the following chemical components in percentage by mass: 0.04-0.085% of C, 0.02-0.5% of Si, 1.3-1.8% of Mn, 0.15-0.5% of Cr, 0.12-0.30% of Mo, 0.058% or less of Nb, 0.15% or less of V, 0.02% or less of Ti, 0.02-0.1% of Al, 0.02% or less of P, 0.005% or less of S, 0.005% or less of N, and the balance being Fe and inevitable impurities, wherein the steel plate has one or two of Nb and V, and the amount of Nb and V satisfies 0.096%≤2Nb+V≤0.17%. The manufacturing method of the present invention includes smelting, continuous casting, hot rolling and pickling. Wherein the hot rolling step includes hot rolling heating, rolling, and cooling coiling. Wherein in the hot rolling heating, a slab obtained after smelting and continuous casting is heated to 1200-1260°C and maintained for 1-3 hr. Then the slab is subjected to rolling, including rough rolling and finish rolling, wherein an outlet temperature of rough rolling is controlled at 1020-1100°C, an outlet temperature of final rolling is controlled at 840-920°C, a total reduction ratio is controlled to be 80% or more. The cooling coiling includes performing laminar flow cooling on the rolled steel plate at a rate of 30-70°C/s to 500-620°C and then coiling.

Regarding the smelting step, the smelting can be carried out by means commonly used at present. For example, the converter smelting is used, and the molten steel is subjected to RH vacuum degassing treatment and LF furnace desulfurization treatment.

Regarding the continuous casting step, the molten steel after smelting can be continuously cast by means mainly used at present. For example, the level of center segregation and inclusions of the continuous casting slab can be controlled by controlling the degree of superheat, controlling the secondary cooling water, and using appropriate soft reduction during the continuous casting process. The inclusion grade can be controlled to less than 1.5.

Hot rolling heating enables sufficient solid solution of V and/or Nb in the steel plate. The heating temperature is 1230±30°C. If the heating temperature exceeds 1260°C, there is a tendency of grain coarsening, which is detrimental to the toughness of the steel plate, and leading to thick oxide scales, which are not easy to remove.

Controlling the outlet temperature of rough rolling at 1020-1100°C during the hot rolling step ensures that the rough rolling is performed in a recrystallization region, avoiding microalloy precipitation in the austenite region; the final rolling temperature is controlled at 840-920°C to enable rolling in the non-recrystallized region for grain refinement; the coiling temperature is in the range of 500-620°C, which can control the bainite transformation and the microalloy precipitation, thereby controlling the strength of the steel plate, as well as the elongation and cold bending properties.

Cooling is carried out after finish rolling, and the cooling of the present invention is laminar flow cooling, for example, water is used for the cooling of the finish rolled steel plate, and the laminar flow cooling is performed on the finish rolled slab at a cooling rate of 30-70°C/s to 500-620°C. Then coiling is performed at 500-620°C, the obtained microstructure is mainly a bainite+ferrite structure with good fatigue properties and nano-precipitates of microalloys (Mo, V)C and (Mo, Nb)C, others are a small amount of pearlite and/or martensite structure, and the sum of the volume fractions of pearlite and martensite is 10% or less. The microstructure and nano-precipitates further enable the steel plate to obtain high strength and better elongation and cold bending properties.

Regarding the pickling step, a currently common pickling method can be used. For example, the pickling speed is controlled at 60-100 m/min, the temperature of the last pickling tank in the pickling process is controlled at 80-90°C, and the Fe ion concentration is controlled at 30-40 g/L.

Optionally, air cooling is also included between the rolling step and the cooling coiling step, wherein the air-cooling time is 1-8 seconds. That is, in the present invention, a delayed cooling control mode is used after rolling to air-cool the finish rolled slab, and then laminar flow cooling is performed, decreasing the slab temperature to 500-620°C by the cooling water, and then coiling is performed. Air cooling for 1-8 seconds after rolling facilitates grain recovery. The air-cooling time can be controlled by controlling the speed of finish rolling strip steel and the position of a starting valve for the cooling water. The rolled slab of the present invention shows little temperature change after air cooling for 1-8 seconds, and has a temperature drop of 10-50°C. The slab is cooled mainly by laminar flow cooling.

Optionally, the chemical components of the steel plate satisfy 0.3%≤0.5Cr+Mo≤0.55%.

Optionally, in the manufacturing method of the steel plate for the torsion beam of the present invention, the chemical components of the steel plate satisfy a carbon equivalent CE_{IIw}≤0.50, wherein CE_{IIw}=%C+%Mn/6+%(Cr+Mo+V)/5+%(Ni+Cu)/15.

Optionally, a microstructure of the steel plate contains bainite and ferrite, the total content of bainite and ferrite in the steel plate is greater than or equal to 90%, that is, the sum of the volume fractions of bainite+ferrite is 90% or more, and the volume fraction of bainite in the steel plate is greater than 50%, for example in the range of 55-85%. Such a microstructure contributes to the strength and bending properties of the steel plate for the torsion beam. Preferably, the sum of the volume fractions of bainite+ferrite is greater than 95%.

Optionally, the microstructure of the steel plate also contains pearlite and/or martensite, that is, the steel plate may also contain pearlite, or martensite, or both pearlite and martensite. Whether having one or both of pearlite and martensite, the sum of the volume fractions of pearlite and martensite in the steel plate is 10% or less. Preferably, the sum of the volume fractions of pearlite and martensite in the steel plate is less than 5%.

By using the above-mentioned composition design and manufacturing process of the steel plate, the mechanical properties of the steel plate can reach the following levels: a longitudinal yield strength of 620 MPa or more, a tensile strength of 760 MPa or more, an A50 elongation of 16% or more, and a 180° cold bending property R/T of 1.05 or more. In addition, the uniform elongation of the steel plate obtained in the present invention is 7.0 or more. Preferably, the longitudinal yield strength is 620-720 MPa, the tensile strength is 760-860 MPa, the A50 elongation is 16%-24%, the 180° cold bending property R/T is 1.05 or more, and the uniform elongation is 7.0-11.5.

Preferably, when the steel plate composition satisfies 0.3%≤0.5Cr+Mo≤0.55% and the hot rolling coiling temperature is 560-620°C in combination with air cooling for 2s or more (including 2s) after rolling, not only a longitudinal yield strength of 620 MPa or more and a tensile strength of 760 MPa or more can be achieved, but also formability can be further improved, i.e., an A50 elongation≥18%, a 180° cold bending property 1.25≥R/T≥1.05, and a uniform elongation≥8.0.

The present invention also provides a torsion beam made of the steel plate for the torsion beam described above.

The torsion beam obtained in the present invention can achieve a longitudinal yield strength of 680 MPa or more, a tensile strength of 800 MPa or more, and a bench fatigue of 0.5-1.8 million times.

In addition, in the present invention, the above-described manufacturing method of the steel plate for the torsion beam is used to manufacture a steel plate, which is used for producing a torsion beam.

The present invention also provides a manufacturing method for a torsion beam, wherein in combination with the chemical composition of the steel plate for the torsion beam, the steel plate obtained by the manufacturing method of the steel plate for the torsion beam are used as work material to produce the torsion beam having excellent properties. Currently, there are mainly two modes of hot stamping and cold forming for the closed torsion beam, and the manufacturing method for the torsion beam of the present invention uses cold forming to produce the torsion beam.

The manufacturing method for the torsion beam of the present invention uses cold forming, which includes the following steps: welding into a tube: welding the steel plate for the torsion beam described above into a round tube; forming: hydroforming or press forming the round tube into a shaped tube, the shaped tube being U-shaped or V-shaped and having an internal fillet, wherein a ratio of the internal fillet R to a thickness T of the shaped tube satisfies R/T≥1.05; and then performing stress relief annealing and/or shot peening to form the torsion beam. That is, the torsion beam of the present invention can be produced by a shot peening step directly, a stress relief annealing step directly, or both a stress relief annealing step and a shot peening step after forming. When the stress relief annealing and shot peening steps are performed, the stress relief annealing step can be performed followed by a shot peening step.

In the step of welding into a tube, for example, a high-strength steel plate is laser welded or high-frequency welded into a round tube and cut into a predetermined size. Since the steel plate of the present invention has a C content of 0.04-0.085% and contains one or both of Nb and V, there is an effect of grain refinement, so that in the step of welding into a tube, the hardness transition of the weld seam is relatively smooth, and the microstructure is relatively fine.

In the forming step, for example, the round tube is press formed or hydroformed to the shaped tube having the desired section, wherein the ratio R/T of the internal fillet to the thickness T of the torsion beam needs to be 1.05 or more to ensure that the inner surface of the fillet is free of folds or the outer surface is free of defects such as wrinkles.

Then, a stress relief annealing step or a shot peening step is performed, or both stress relief annealing step and shot peening step are performed.

In the stress relief annealing step, for example, the formed shaped tube is placed in a heating furnace and heated up with the furnace, maintained at 475-610°C for 20-90 min, then cooled to 300°C with the furnace and then air cooled. During the production of the steel plate into a welding tube and the forming of a pipe fitting into the shaped tube, the internal structure of the steel has a relatively high of residual stress, particularly tensile stress on the surface, resulting in a relatively short fatigue life of the torsion beam. The stress relief annealing can eliminate the stress in the forming process while keeping the mechanical properties of the annealed shaped tube not decreasing or even increasing, wherein the longitudinal yield strength is 680 MPa or more, the tensile strength is 800 MPa or more, and the A50 elongation is 16% or more.

In the shot peening step, for example, a stress concentration region, i.e., a fillet position, of the pipe fitting is subjected to surface shot peening by a shot peening apparatus. The shot peening may be performed on the inner surface or outer surface of the internal fillet, or both the inner and outer surfaces of the internal fillet. The shot peening step ensures that the surface of the cross beam of the torsion beam is under compressive stress, thereby improving the fatigue performance of the torsion beam.

In addition, in the manufacturing method for the torsion beam of the present invention, the formed shaped tube can be respectively subjected to stress relief annealing and shot peening, i.e., the shaped tube is first subjected to stress relief annealing to eliminate the stress in the forming process, and then the surface of the annealed pipe fitting is subjected to shot peening, thereby further enhancing the fatigue properties of the formed torsion beam.

To obtain the torsion beam with high strength as well as excellent fatigue properties, in the manufacturing method for the torsion beam of the present invention, first, the fatigue performance of the finally formed torsion beam is improved by improving the surface conditions of fillet R from the perspective of improving the elongation and bending properties; and secondly, the fatigue performance of the torsion beam is improved from the perspective of improving the strength of the steel plate, as well as increasing the longitudinal yield strength and tensile strength of the finally formed torsion beam. Accordingly, to achieve the above two effects at the same time, the chemical composition, the microstructure, and the manufacturing method of the steel plate are improved.

Additionally, in the process of manufacturing the torsion beam from the obtained steel plate, the structure of the formed torsion beam will also be designed, thereby matching the properties of the obtained steel plate (e.g. by using the composition design and manufacturing method of the steel plate for the torsion beam of the present invention, the 180° cold bending property R/T of 1.05 or more is achieved. Accordingly, during the production of the torsion beam, the ratio R/T of the internal fillet to the thickness T of the torsion beam is required to be 1.05 or more to ensure that the structure of the manufactured torsion beam is matched with the properties of the original steel plate for the torsion beam, thereby significantly reducing the occurrence of folding, wrinkling, breakage and the like which reduce the fatigue performance).

It is surprisingly found that during the manufacturing of the torsion beam, the strength of the torsion beam can be maintained or even improved during the stress relief annealing compared with the strength of the steel plate for the torsion beam due to the addition of Nb and/or V elements during the manufacturing of the steel plate. In addition, the addition of Ti can also serve to maintain or even increase the strength of the torsion beam. The obtained steel plate for the torsion beam in the present invention has a longitudinal yield strength of 620 MPa or more and a tensile strength of 760 MPa or more, and after manufacturing into the torsion beam, the torsion beam has a yield strength of 680 MPa or more and a tensile strength of 800 MPa or more.

The torsion beam formed by the manufacturing method of the present invention has a core hardness of 260 HV or more, and a microhardness at 0.05 mm from the inner or outer surface of the torsion beam is 30-80 HV higher than the core hardness, thereby achieving the effect of the outside having high strength and the inside having high toughness, and avoiding inner folding of the torsion beam and improving fatigue strength.

By using the manufacturing method for the torsion beam of the present invention, the formed torsion beam can achieve excellent performance of a longitudinal yield strength of 680 MPa or more, a tensile strength of 800 MPa or more, and a bench fatigue of 0.5-1.8 million times.

### BRIEF DESCRIPTION OF THE DRAWINGS

Fig. 1 shows a metallographic microstructure diagram of a steel plate in Example 2 of the present invention;
Fig. 2 shows a schematic diagram of a cross-sectional profile of an internal fillet of a torsion beam in an example of the present invention; and
Fig. 3 shows a schematic diagram of the change in microhardness of a torsion beam in Example 1, Example 11, and a torsion beam that is not subjected to stress relief annealing according to the present invention.

### DETAILED DESCRIPTION

Embodiments of the present invention will be described below with reference to specific embodiments, and those skilled in the art can easily understand other advantages and effects of the present invention from the contents disclosed in the description. Although the present invention will be described in connection with preferred embodiments, it is not intended that the features of the present invention be limited to this embodiment. On the contrary, the description of the present invention in connection with the embodiments is intended to cover other alternatives or modifications that may be extended based on the claims of the present invention. The following description contains numerous specific details to provide a thorough understanding of the present invention. The present invention may also be implemented without these details. In addition, some specific details will be omitted from the description to avoid confusing or obscuring the focus of the present invention. It should be noted that the embodiments of the present invention and the features of the embodiments can be combined with each other without conflict.

It should be noted that in the present description, like reference signs and letters represent like items in the following drawings, and therefore, once a certain item is defined in one drawing, it need not be further defined and explained in the following drawings.

In order to make the objects, technical solutions and advantages of the present invention more clear, the embodiments of the present invention will be further described in detail below with reference to the accompanying drawings.

Table 1 shows the mass percentage of each chemical element in Examples 1-10 and Comparative examples 1-7 of the present invention. Table 2 shows the corresponding steel plate manufacturing method in Examples 1-10 and Comparative examples 1-7, and the properties of the manufactured steel plates.

The manufacturing method of the steel plate for the torsion beam of the present invention includes the steps of smelting, continuous casting, hot rolling, and pickling. In the following examples and comparative examples, first converter smelting is performed, and the molten steel is subjected to RH vacuum degassing treatment and LF furnace desulfurization treatment, and a specific method can refer to the existing smelting method. Continuous casting is then performed. The level of center segregation and inclusions of the continuous casting slab can be controlled by, for example, controlling the degree of superheat, controlling the secondary cooling water, and using appropriate soft reduction during the continuous casting process, and the inclusion grade can be controlled to less than 1.5. The inclusion grade in this description refers to GB/T 10561-2005.

The obtained slab is hot rolled after continuous casting. The hot rolling step includes hot rolling heating, rolling, and cooling coiling. The heating temperature and holding time of the hot rolling heating in the following examples and comparative examples are shown in Table 2. The rolling process includes rough rolling and finish rolling, and Table 2 also lists the outlet temperature of rough rolling and final rolling temperature in the examples. A steel plate is formed after rolling, the steel plate is then subjected to cooling coiling, cooling adopts laminar flow cooling, and the coiling temperature in Table 2 represents the temperature at which the steel plate is coiled. The air-cooling time represents the time during which the slab is air cooled after rolling, and when the air-cooling time is 0, it means that in this example, laminar flow cooling is directly conducted without air cooling.

The steel plates formed in the following Examples 1-10 and Comparative examples 1-7 are subjected to property tests. In this description, mechanical property tests are carried out according to the standard GB/T228.1-2010, and the 180° cold bending property R/T is carried out according to the standard GB/T232-2010, and the results of the longitudinal yield strength, tensile strength, uniform elongation, A50 elongation, and 180° cold bending property are obtained accordingly. In Table 2, in the column of the 180° cold bending property, no wrinkle on the cold bending surface is expressed as "OK" and having wrinkle on cold bending surface is expressed as "NG".

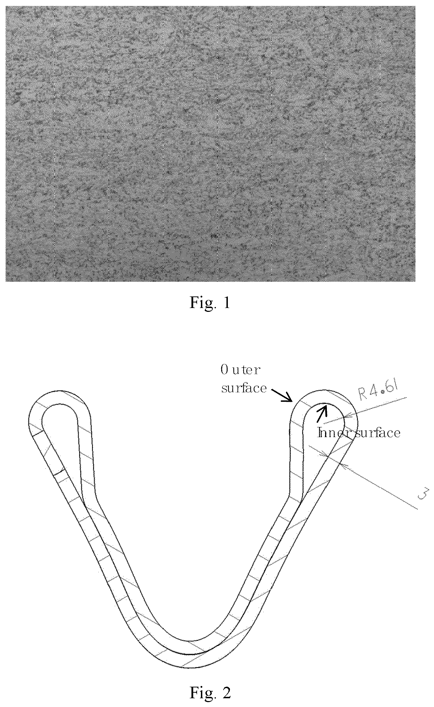

Fig. 1 is a metallographic microstructure diagram of a steel plate in Example 2. It can be seen from the figure that the microstructure of the obtained steel plate includes bainite and ferrite, as well as a small amount of pearlite. The sum of the volume fractions of bainite+ferrite in this example is greater than 90%.

Table 3 shows the calculation parameters and properties of torsion beams made of the steel plates in the above examples. The manufacturing method for the torsion beam of the present invention uses cold forming to manufacture the torsion beam, including the steps of welding into a tube, forming, and stress relief annealing and/or shot peening to form the torsion beam.

The steel plates in the above examples are welded to form round tubes, and then the round tubes are subjected to hydroforming or press forming to form shaped tubes which are U-shaped or V-shaped and have internal fillets, and the structure of the formed torsion beam is shown in Fig. 2. The radius R of the internal fillet of the torsion beam and the thickness T of the torsion beam are shown in Fig. 2. In the present invention, the internal fillet with R/T greater than or equal to 1.05 is manufactured during manufacturing of the torsion beam, e.g., the internal fillet has a radius R of 4.61 and the thickness T is 3, resulting in R/T=1.537 in Fig. 2. For example, the round tube is placed in a lower die and is subjected to press forming by closing an upper die, or a hydroforming method in which a tube is pressure expansion molded by liquid after closing a die is adopted. In Examples 11-21 and Comparative examples 8-14, steel plates are formed into torsion beams in different ways, respectively. Table 3 lists the R/T values at the internal fillets formed in different examples and comparative examples, the process after forming, that is, the temperature and time of stress relief annealing, the position of shot peening and other specific parameters.

The torsion beams formed in Examples 11-20 and Comparative examples 8-14 described below are subjected to performance tests. The mechanical performance tests in this description are carried out in accordance with the standard GB/T 228.1-2010. The longitudinal yield strength and tensile strength at the internal fillet cannot be measured, and the core hardness at the internal fillet and a microhardness difference between the surface and the core are measurable. The microhardness tests are carried out according to GB/T 4342-1991.

The test conditions for a torsion beam bench include a displacement control of ± 50 mm and a frequency of 1.5 HZ.

Detailed description is given below in conjunction with the examples and comparative examples in Tables 1, 2 and 3:
In Examples 1-10 in Tables 1 and 2 and Examples 11-21 in Table 3, by adopting the design method of the present invention, the steel plate with high strength and high formability and the torsion beam with high strength and high fatigue performance are obtained.

Examples 1 and 3-10 adopt an air-cooling mode in the steel plate manufacturing process. In the examples, when the coiling temperature is 500-620°C and the carbon equivalent is less than 0.50, relatively good formability and elongation can be achieved.

The high carbon content in Comparative Example 1 results in poor bending properties, further resulting in microcracks on the surface of the fillet R during the hydroforming process in Comparative Example 8 in Table 3, and cracks at the weld seam, ultimately resulting in the bench fatigue not reaching 0.5 million times. The steel plates in Example 4 and Comparative Example 1 are produced by similar process parameters (e.g., the coiling temperature and the air-cooling time are the same), while in Comparative Example 1, a carbon equivalent is higher, and in Example 4, a carbon equivalent is lower, so that the steel plate in Example 4 has better weldability.

The relatively low Cr and Mo content in Comparative Example 2 results in relatively low tempering resistance (i.e., lower strength). In Comparative Examples 2 and 3, the requirement of 0.096%≤2Nb+V≤0.17% is not satisfied, resulting in relatively low yield strength and lower tensile strength of the steel plate. Accordingly, the steel plates in Comparative Examples 2 and 3 are used to produce torsion beams, i.e., the strength of the torsion beams obtained in Comparative Examples 9 and 10 is also low, eventually resulting in relatively weak fatigue resistance of the material, and the effect of weight reduction cannot be achieved.

In Comparative Example 4, the carbon content is relatively low, while the hot rolling coiling temperature is too high, which results in a relatively low plate strength, does not reach the requirement of the tensile strength of the steel plate of 760 MPa or more, and finally results in the condition that the tensile strength of the torsion beam in Comparative Example 11 in Table 3 cannot reach 800MPa, and the effect of weight reduction cannot be achieved.

The microalloy content in Comparative Example 5 is relatively high, which does not satisfy the condition of 0.096%≤2Nb+V≤0.17%, resulting in high strength of the steel plate and a bending property that does not satisfy R/T≥1.05, further resulting in microcracks on the surface of the fillet during hydroforming in Comparative Example 12 in Table 3, eventually resulting in a bench fatigue that cannot reach 0.5 million times.

The relatively low Cr content in Comparative Example 6 results in a lower strength of the plate and ultimately in a relatively poor bench fatigue capacity of the torsion beam in Comparative Example 13. Due to the low Cr content and the high annealing temperature during the manufacturing of the torsion beam, the strength is reduced, and the effects of high strength and weight reduction cannot be achieved.

The strength of the plate and the strength of the final torsion beam (Comparative Example 14) can reach 800 MPa or more by microalloy strengthening with high Ti content in Comparative Example 7, but the torsion beam in Comparative Example 14 has a final bench fatigue performance of only 0.29 million times, mainly due to the coarse TiN precipitates, without Nb and V precipitations that are beneficial to the fatigue performance. In addition, the coiling temperature in Comparative Example 7 is only 480°C, resulting in poor formability of the material.

In Examples 11-21, the fatigue resistance of the torsion beam is improved by using stress relief annealing or shot peening step during forming the torsion beam, wherein the longitudinal yield strength of the torsion beam is maintained or even improved by using the stress relief annealing process and/or the shot peening process.

The increase in yield strength of the torsion beam after the stress relief annealing is more pronounced in Example 11 compared with Example 21.

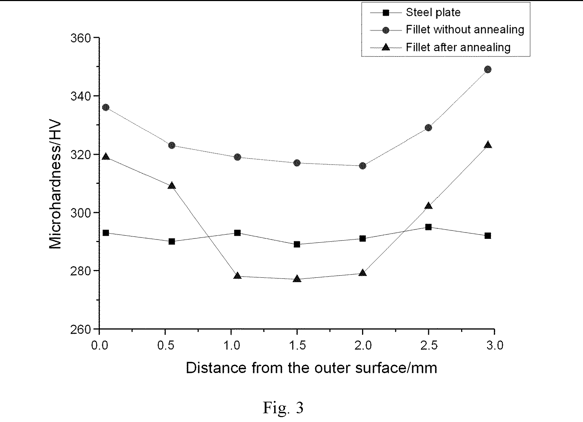

Fig. 3 shows the change in microhardness along the thickness direction of a steel plate in Example 1, i.e., the change in microhardness of the steel plate in the figure. According to the present invention, the steel plate in Example 1 is subjected to welding into a tube and forming to form a shaped tube, and the change in microhardness along the thickness direction of the fillet without the stress relief annealing step, i.e., the change in microhardness at the fillet without annealing in Fig. 3 is detected. The steel plate in Example 1 is also subjected to welding into a tube, forming, and stress relief annealing in the present invention to form the torsion beam, i.e., Example 11 of the present invention, and the change in microhardness at the fillet thereof, i.e., the change in microhardness at the fillet subjected to annealing in Fig. 3 is detected. After the stress relief annealing, the microhardness of the surface in Example 11 is relatively high and the core hardness at the fillet is relatively low, achieving the effect of the outside having high strength and the inside having high toughness.

**Table 1. Chemical composition**

| (wt%, the balance is Fe and other inevitable impurities besides P, S and N) | | | | | | | | | | | | | | | |
|---|---|---|---|---|---|---|---|---|---|---|---|---|---|---|---|
| No. | C | Si | Mn | Cr | Mo | Nb | V | Ti | Al | CE_{IIW} | 2Nb+V | 0.5Cr+Mo | P | S | N |
| Example 1 | 0.071 | 0.15 | 1.56 | 0.42 | 0.25 | 0.015 | 0.12 | 0 | 0.042 | 0.489 | 0.15 | 0.46 | 0.010 | 0.003 | 0.0045 |
| Example 2 | 0.061 | 0.22 | 1.56 | 0.48 | 0.3 | 0 | 0.15 | 0 | 0.024 | 0.507 | 0.15 | 0.54 | 0.005 | 0.005 | 0.0050 |
| Example 3 | 0.078 | 0.35 | 1.42 | 0.42 | 0.25 | 0.055 | 0 | 0 | 0.038 | 0.449 | 0.11 | 0.46 | 0.020 | 0.002 | 0.0040 |
| Example 4 | 0.085 | 0.05 | 1.31 | 0.30 | 0.15 | 0.022 | 0.1 | 0 | 0.096 | 0.413 | 0.144 | 0.3 | 0.013 | 0.004 | 0.0042 |
| Example 5 | 0.082 | 0.07 | 1.48 | 0.45 | 0.12 | 0.022 | 0.12 | 0 | 0.056 | 0.467 | 0.164 | 0.345 | 0.012 | 0.003 | 0.0045 |
| Example 6 | 0.052 | 0.48 | 1.78 | 0.37 | 0.26 | 0.015 | 0.12 | 0 | 0.07 | 0.499 | 0.15 | 0.445 | 0.011 | 0.002 | 0.0025 |
| Example 7 | 0.081 | 0.26 | 1.62 | 0.36 | 0.25 | 0.017 | 0.1 | 0 | 0.033 | 0.493 | 0.134 | 0.43 | 0.009 | 0.004 | 0.0036 |
| Example 8 | 0.04 | 0.15 | 1.66 | 0.15 | 0.25 | 0.015 | 0.12 | 0 | 0.042 | 0.421 | 0.15 | 0.325 | 0.016 | 0.001 | 0.0023 |
| Example 9 | 0.068 | 0.35 | 1.42 | 0.42 | 0.25 | 0.048 | 0 | 0.015 | 0.038 | 0.439 | 0.096 | 0.46 | 0.008 | 0.002 | 0.0042 |
| Example 10 | 0.061 | 0.22 | 1.56 | 0.48 | 0.3 | 0 | 0.15 | 0.01 | 0.024 | 0.507 | 0.15 | 0.54 | 0.007 | 0.002 | 0.0038 |
| Comparative Example 1 | **0.13** | 0.48 | **1.88** | 0.35 | 0.15 | 0.022 | 0.12 | 0 | 0.033 | 0.567 | 0.164 | 0.325 | 0.010 | 0.003 | 0.0045 |
| Comparative Example 2 | 0.071 | 0.15 | 1.56 | **0.10** | **0.11** | 0 | 0.07 | 0 | 0.042 | 0.387 | **0.07** | 0.16 | 0.013 | 0.002 | 0.0038 |
| Comparative Example 3 | 0.082 | 0.15 | 1.56 | 0.30 | 0.16 | 0.035 | 0 | 0 | 0.042 | 0.434 | **0.07** | 0.31 | 0.012 | 0.001 | 0.0036 |
| Comparative Example 4 | **0.03** | 0.15 | 1.56 | 0.42 | 0.25 | 0.015 | 0.12 | 0.02 | 0.042 | 0.448 | 0.15 | 0.46 | 0.011 | 0.004 | 0.0045 |
| Comparative Example 5 | 0.078 | 0.25 | 1.63 | 0.15 | 0.26 | 0.036 | 0.15 | 0 | 0.033 | 0.462 | **0.222** | 0.335 | 0.009 | 0.005 | 0.0023 |
| Comparative Example 6 | 0.082 | 0.45 | 1.32 | **0.10** | 0.12 | 0.025 | 0.11 | 0.01 | 0.082 | 0.368 | 0.16 | 0.17 | 0.016 | 0.004 | 0.0050 |
| Comparative Example 7 | 0.078 | 0.25 | 1.42 | 0.42 | 0.15 | 0.022 | 0.06 | **0.10** | 0.033 | 0.441 | 0.104 | 0.36 | 0.007 | 0.004 | 0.0045 |

**Table 2 Manufacturing process and mechanical properties of steel plate**

| No. | Heating temperature /°C | Holding time /min | Outlet temperature of rough rolling /°C | Final rolling temperature/°C | Air cooling time/s | Laminar flow cooling rate/(°C/s) | Coiling temperature/°C | Total reduction ratio/% | Longitudinal yield strength/Mpa | Tensile strength/Mpa | Uniform elongation/% | A50 elongation/% | 180° cold bending (R/T≥1.05) |
|---|---|---|---|---|---|---|---|---|---|---|---|---|---|
| Example 1 | 1230 | 122 | 1060 | 880 | 3 | 50 | 580 | 98.4 | 676 | 842 | 10.0 | 21.5 | OK |
| Example 2 | 1250 | 79 | 1070 | 920 | 0 | 30 | 500 | 99.0 | 645 | 788 | 7.0 | 16.5 | OK |
| Example 3 | 1220 | 109 | 1020 | 840 | 8 | 70 | 520 | 97.3 | 655 | 782 | 7.5 | 17.5 | OK |
| Example 4 | 1230 | 125 | 1050 | 880 | 3 | 50 | 540 | 97.5 | 715 | 855 | 8.5 | 17.5 | OK |
| Example 5 | 1260 | 65 | 1100 | 900 | 5 | 50 | 610 | 99.2 | 645 | 808 | 11.5 | 24.0 | OK |
| Example 6 | 1230 | 180 | 1050 | 860 | 5 | 50 | 560 | 98.2 | 655 | 778 | 8.5 | 18.0 | OK |
| Example 7 | 1250 | 132 | 1080 | 900 | 2 | 40 | 600 | 98.5 | 658 | 813 | 10.5 | 23.0 | OK |
| Example 8 | 1230 | 96 | 1060 | 880 | 4 | 30 | 620 | 98.4 | 655 | 785 | 11.0 | 24.0 | OK |
| Example 9 | 1260 | 80 | 1020 | 880 | 3 | 50 | 560 | 97.3 | 628 | 773 | 9.5 | 21.5 | OK |
| Example 10 | 1260 | 79 | 1020 | 880 | 5 | 50 | 500 | 97.3 | 632 | 786 | 7.5 | 16.5 | OK |
| Comparative Example 1 | 1230 | 122 | 1060 | 880 | 3 | 50 | 540 | 98.4 | 801 | 926 | **5.0** | **12.0** | NG |
| Comparative Example 2 | 1230 | 122 | 1060 | 880 | 3 | 50 | 500 | 98.4 | **583** | 698 | 7.0 | 17.5 | OK |
| Comparative Example 3 | 1230 | 122 | 1060 | 880 | 3 | 50 | 500 | 98.4 | **602** | 725 | 7.0 | 17.0 | OK |
| Comparative Example 4 | 1230 | 122 | 1060 | 880 | 3 | 50 | 650 | 98.4 | **602** | 716 | 10.0 | 23.5 | OK |
| Comparative Example 5 | 1230 | 122 | 1060 | 880 | 3 | 50 | 500 | 98.4 | 802 | 953 | **5.5** | **14.0** | NG |
| Comparative Example 6 | 1230 | 122 | 1060 | 880 | 3 | 50 | 620 | 98.4 | 623 | 736 | 10.0 | 25.0 | OK |
| Comparative Example 7 | 1230 | 122 | 1060 | 880 | 3 | 50 | **480** | 98.4 | 702 | 843 | **5.5** | **14.5** | NG |

**Table 3. Production process and corresponding performance of torsion beam**

| No | Steel plate selected | Forming process | R/T at the internal fillet | Stress relief annealing process | Shot peening process | Core hardness at the fillet/HV | Microhardness difference between the position at 0.05mm from the surface and the core/ΔHV | Yield strength at non-fillet/MPa | Tensile strength at non-fillet/MPa | Bench fatigue life/million time | Yield strength difference between the torsion beam and the steel plate used/ΔMPa |
|---|---|---|---|---|---|---|---|---|---|---|---|
| Example 11 | Example 1 | Hydroforming | 200 | 500°C+60min | No | 283 | 37 | 756 | 850 | 0.86 | 80 |
| Example 12 | Example 2 | Hydroforming | 1.25 | 550°C+30min | No | 275 | 53 | 732 | 806 | 0.95 | 87 |
| Example 13 | Example 3 | Hydroforming | 2.30 | 610°C+20min | No | 265 | 33 | 690 | 800 | 0.53 | 35 |
| Example 14 | Example 4 | Hydroforming | 1.25 | 575°C+30min | Outer surface shot peening | 280 | 64 | 782 | 863 | 0.93 | 67 |
| Example 15 | Example 5 | Hydroforming | 1.05 | 575°C+30min | Inner and outer surfaces shot peening | 263 | 80 | 724 | 832 | 1.80 | 79 |
| Example 16 | Example 6 | Hydroforming | 1.55 | No | Inner and outer surfaces shot peening | 302 | 77 | 692 | 814 | 1.01 | 37 |
| Example 17 | Example 7 | Hydroforming | 1.50 | 575°C+30min | Outer surface shot peening | 263 | 49 | 721 | 835 | 0.98 | 63 |
| Example 18 | Example 8 | Hydroforming | 1.25 | 475°C+30min | Inner and outer surfaces shot peening | 262 | 64 | 742 | 838 | 1.38 | 87 |
| Example 19 | Example 9 | Press forming | 1.50 | 610°C+20min | No | 265 | 32 | 680 | 813 | 0.78 | 52 |
| Example 20 | Example 10 | Press forming | 1.50 | 575°C+30min | Inner and outer surfaces shot peening | 276 | 63 | 718 | 829 | 0.97 | 86 |
| Example 21 | Example 1 | Hydroforming | 200 | No | Inner and outer surfaces shot peening | 286 | 69 | 703 | 869 | 1.03 | 27 |
| Comparative Example 8 | Comparative Example 1 | Hydroforming | 1.25 | 550°C+30min | No | 290 | Weld seam cracking Fillet R cracking | 821 | 902 | 0.15 | 20 |
| Comparative Example 9 | Comparative Example 2 | Hydroforming | 1.25 | No | Inner and outer surfaces shot peening | 231 | Cracking | 602 | 732 | 0.31 | 19 |
| Comparative Example 10 | Comparative Example 3 | Hydroforming | 2.30 | 550°C+30min | No | 249 | Cracking | 626 | 765 | 0.43 | 24 |
| Comparative Example 11 | Comparative Example 4 | Hydroforming | 2.00 | 550°C+30min | No | 239 | Cracking | 638 | 753 | 0.45 | 36 |
| Comparative Example 12 | Comparative Example 5 | Hydroforming | 1.25 | 475°C+30min | Inner and outer surfaces shot peening | 296 | Fillet R cracking | 843 | 928 | 0.25 | 41 |
| Comparative Example 13 | Comparative Example 6 | Press forming | 1.50 | 630°C+20min | No | 245 | 35 | 618 | 742 | 0.48 | -5 |
| Comparative Example 14 | Comparative Example 7 | Hydroforming | 200 | 550°C+30min | No | 264 | Fillet R cracking | 742 | 824 | 0.29 | 40 |

Although the present invention has been illustrated and described by referring to some preferred embodiments of the present invention, those of ordinary skill in the art should understand that the above content is a further detailed description of the present invention in combination with specific embodiments, and it cannot be determined that the specific embodiments of the present invention are limited to these descriptions. Those skilled in the art can make various changes in the form and details, including some simple deductions or replacements without departing from the spirit and scope of the present invention.

## Claims

1. A steel plate for a torsion beam, comprising the following chemical components in percentage by mass:
0.04-0.085% of C, 0.02-0.5% of Si, 1.3-1.8% of Mn, 0.15-0.5% of Cr, 0.12-0.30% of Mo, 0.058% or less of Nb, 0.15% or less of V, 0.02% or less of Ti, 0.02-0. 1% of Al, 0.02% or less of P, 0.005% or less of S, and 0.005% or less of N, the balance being Fe and inevitable impurities,
wherein the steel plate comprises one or two of Nb and V, and the amount of Nb and V satisfies the following formula: 0.096%≤2Nb+V≤0.17%.

2. The steel plate for the torsion beam of claim 1, wherein the chemical components of the steel plate satisfy 0.3%≤0.5Cr+Mo≤0.55%.

3. The steel plate for the torsion beam of claim 1, wherein the chemical components of the steel plate satisfy: a carbon equivalent CE_{IIw}≤0.50, wherein CE_{IIw}=%C+%Mn/6+%(Cr+Mo+V)/5+%(Ni+Cu)/15.

4. The steel plate for the torsion beam of claim 1, wherein a microstructure of the steel plate contains bainite and ferrite, wherein a total volume fraction of the bainite and the ferrite is 90% or more, and a volume fraction of the bainite is greater than 50%.

5. The steel plate for the torsion beam of claim 4, wherein the microstructure of the steel plate further contains pearlite and/or martensite.

6. The steel plate for the torsion beam of any of claims 1 to 5, wherein the steel plate has a longitudinal yield strength of 620 MPa or more, a tensile strength of 760 MPa or more, an A50 elongation of 16% or more, and a 180° cold bending property R/T of 1.05 or more.

7. A manufacturing method of a steel plate for a torsion beam, wherein the steel plate comprises the following chemical components in percentage by mass:
0.04-0.085% of C, 0.02-0.5% of Si, 1.3-1.8% of Mn, 0.15-0.5% of Cr, 0.12-0.30% of Mo, 0.058% or less of Nb, 0.15% or less of V, 0.02% or less of Ti, 0.02-0.1% of Al, 0.02% or less of P, 0.005% or less of S, and 0.005% or less of N, and the balance being Fe and inevitable impurities, wherein the steel plate comprises one or two of Nb and V, and the amount of Nb and V satisfies the following formula: 0.096%≤2Nb+V≤0.17%; and
the manufacturing method comprises smelting, continuous casting, hot rolling and pickling, wherein
the hot rolling comprises hot rolling heating, rolling, and cooling coiling, wherein in the hot rolling heating, a slab obtained after smelting and continuous casting is heated to 1200-1260°C and maintained for 1-3 hr.; the rolling comprises rough rolling and finish rolling, wherein an outlet temperature of the rough rolling is controlled at 1020-1100°C, an outlet temperature of the final rolling is controlled at 840-920°C, and a total reduction ratio is controlled to be 80% or more; and in the cooling coiling, the rolled steel plate is subjected to laminar flow cooling at a rate of 30-70°C/s to 500-620°C, and then coiled.

8. The manufacturing method of the steel plate for the torsion beam of claim 7, wherein the manufacturing method further comprises air cooling between the rolling and the cooling coiling, wherein the air cooling time is 1-8s.

9. The manufacturing method of the steel plate for the torsion beam of claim 7, wherein the chemical components of the steel plate satisfy 0.3%≤0.5Cr+Mo≤0.55%.

10. The manufacturing method of the steel plate for the torsion beam of claim 7, wherein the chemical components of the steel plate satisfy: a carbon equivalent CE_{IIw}≤0.50, wherein CE_{IIw}=%C+%Mn/6+%(Cr+Mo+V)/5+%(Ni+Cu)/15.

11. The manufacturing method of the steel plate for the torsion beam of claim 6, wherein a microstructure of the steel plate for the torsion beam contains bainite and ferrite, a total volume fraction of the bainite and the ferrite is 90% or more, and a volume fraction of the bainite is greater than 50%.

12. The manufacturing method of the steel plate for the torsion beam of claim 8, wherein the microstructure of the steel plate further contains pearlite and/or martensite.

13. The manufacturing method of the steel plate for the torsion beam of any of claims 7 to 12, wherein the steel plate has a longitudinal yield strength of 620 MPa or more, a tensile strength of 760 MPa or more, an A50 elongation of 16% or more, and a 180° cold bending property R/T of 1.05 or more.

14. A torsion beam, made of the steel plate for the torsion beam of any of claims 1 to 6.

15. The torsion beam of claim 14, wherein the torsion beam has a longitudinal yield strength of 680 MPa or more, a tensile strength of 800 MPa or more, and a bench fatigue of 0.5-1.8 million times.

16. A manufacturing method for a torsion beam, comprising the following steps:
welding into a tube: welding the steel plate for the torsion beam of any of claims 1 to 6 into a round tube;
forming: hydroforming or press forming the round tube into a shaped tube, the shaped tube being U-shaped or V-shaped and having an internal fillet, wherein a ratio of the internal fillet R to a thickness T of the shaped tube satisfies R/T≥1.05; and
then preforming stress relief annealing and/or shot peening to form the torsion beam.

17. The manufacturing method for the torsion beam of claim 16, wherein in the stress relief annealing step, the shaped tube is heated, maintained at 475-610°C for 20-90 min, then air cooled after cooling to 300°C.

18. The manufacturing method for the torsion beam of claim 16, wherein in the shot peening step, the inner or outer surface of the internal fillet of the shaped tube is subjected to shot peening.

19. The manufacturing method for the torsion beam of claim 16, wherein a core hardness at the internal fillet is 260 HV or more, and a microhardness at 0.05 mm from the inner or outer surface of the internal fillet is 30-80 HV higher than the core hardness.

20. The manufacturing method for the torsion beam of any of claims 16 to 19, wherein the torsion beam has a longitudinal yield strength of 680 MPa or more, a tensile strength of 800 MPa or more, and a bench fatigue of 0.5-1.8 million times.
